# EUROPÄISCHE PATENTSCHRIFT

(11) **EP 0 995 646 B1**
(45) Veröffentlichungstag und Bekanntmachung des Hinweises auf die Patenterteilung: **09.04.2003**
(21) Anmeldenummer: 99118155.3
(22) Anmeldetag: 11.09.1999
(51) Int. Cl.: B60R 21/32, B60R 21/01

(54) **Verfahren zum Entschärfen von pyrotechnischen Aktuatoren in einem Fahrzeug**
Method for disarming pyrotechnic igniters in a vehicle
Procédé pour désarmer les éléments d'allumage pyrotechniques dans un véhicule

(30) Priorität: 24.10.1998 DE 19849079
(43) Veröffentlichungstag der Anmeldung: 26.04.2000
(73) Patentinhaber: Bayerische Motoren Werke Aktiengesellschaft, 80809 München (DE)
(72) Erfinder: Griessbach, Robert, 83629 Weyarn (DE)

(56) Entgegenhaltungen:
- WO-A-98/37488
- US-A- 5 719 551
- US-A- 5 721 527
- US-A- 5 796 329

## Beschreibung

Die Erfindung bezieht sich auf ein Verfahren mit den Merkmalen des Oberbegriffs von Patentanspruch 1.

Derartige Verfahren sind im stand der Technik bekannt.

Bei der Verwertung von Altfahrzeugen besteht die Vorschrift, daß alle pyrotechnischen Aktuatoren, die vorzugsweise bei Sicherheitssystemen wie Airbags, Gurtstraffem u. dgl. verwendet werden, entweder ausgelöst oder aus dem Fahrzeug ausgebaut werden müssen, bevor das Fahrzeug im Shredder weiterverarbeitet wird. Außerdem werden die Fahrzeughersteller in Zukunft Altautos kostenlos zurücknehmen und verwerten. Daraus ergibt sich der Zwang, das Recycling aller Komponenten möglichst preisgünstig zu gestalten. Zum Entschärfen der pyrotechnischen Komponenten werden nach der Demontage von Verkleidungsteilen die Anschlußdrähte der Zündpillen zugänglich gemacht und anschließend durch Anlegen einer Spannung die Aktuatoren ausgelöst. Diese Vorgehensweise ist vor allem bei der zunehmenden Zahl von pyrotechnischen Aktuatoren im Fahrzeug zeitaufwendig und damit kostenintensiv. Ein Ausbau der pyrotechnischen Aktuatoren scheidet ebenfalls aufgrund des Zeit- und damit Kostenaufwands aus.

Der Erfindung liegt die Aufgabe zugrunde, ein Verfahren der eingangs genannten Art zu schaffen, mit dem mehrere pyrotechnische Aktuatoren kostengünstig und umweltverträglich entschärft werden können.

Die Erfindung löst diese Aufgabe mit den Merkmalen des Patentanspruchs 1.

Die Aktuatoren werden durch bzw. im Anschluß an die einmalige Eingabe "des" Codesignals gleichzeitig oder nacheinander entschärft. Für die Eingabe kann vorzugsweise die Diagnose- bzw. Busschnittstelle vorgesehen sein. Dabei wird durch die Erfindung erreicht, daß diese Auslösung absolut fehlauslöse- und mißbrauchssicher ist.

Um die oben genannte Mißbrauchssicherheit zu erhöhen, wird die Auslösung der pyrotechnischen Aktuatoren über eine fahrzeugindividuelles Codesignal (in Form einer Codenummer) abgesichert. Diese Codenummer wird bei der Herstellung des Fahrzeugs z.B. in die Airbag-Steuereinheit nichtflüchtig, nicht auslesbar und nicht überschreibbar eingetragen und parallel dazu in einer zentralen Datenbank abgelegt.

Bei der Verschrottung des Fahrzeugs wird diese Nummer von einer autorisierten Stelle abgerufen. Dieser Zugriff auf die Datenbank wird dokumentiert, so daß der Vorgang nachvollziehbar ist. Damit ist auch in der Datenbank abgelegt, daß das betreffende Fahrzeug verschrottet worden ist.

Durch das erfindungsgemäße Verfahren wird sichergestellt, daß auch bei Bekanntwerden des Verfahrens und der zugehörigen Telegramme auf der Schnittstelle zum Steuergerät eine mißbräuchliche Auslösung der pyrotechnischen Aktuatoren verhindert wird.

Um eine erhöhte Sicherheit gegen Fehlauslösungen zu erhalten wird zusätzlich vorgeschlagen, daß zur Auslösung der Aktuatoren neben dem beschriebenen Telegramm zusätzlich ein Hardwaresignal angelegt werden muß. Dazu bietet sich z. B. an, einen externen, relativ leicht zugänglichen Sensor abzustecken und ein "Recyclingsteuergerät" anzustecken, welches ein im normalen Betrieb nicht vorkommendes Signal abgibt. Damit wird verhindert, daß bei einer Störung der Kommunikation über die oben beschriebene Schnittstelle eine Fehlauslösung erfolgen kann.

Damit ergibt sich ein einfach handzuhabendes, mißbrauchssicheres Verfahren zur einmaligen Auslösung der pyrotechnischen Aktuatoren.

## Patentansprüche

1. Verfahren zum Entschärfen von pyrotechnischen Aktuatoren in einem Fahrzeug, **dadurch gekennzeichnet, daß** die Aktuatoren gemeinsam ausgelöst werden, wenn ein hierfür vorgesehenes, im Fahrzeug gespeichertes Codesignal von außen eingegeben wird und die Prüfung der beiden Codesignale auf Übereinstimmung durchgeführt wird.

2. Verfahren nach Anspruch 1, **dadurch gekennzeichnet, daß** die Aktuatoren gleichzeitig ausgelöst werden.

3. Verfahren nach Anspruch 1, **dadurch gekennzeichnet, daß** die Aktuatoren in definiertem zeitlichen Abstand nacheinander ausgelöst werden.

4. Verfahren nach einem der Ansprüche 1 bis 3, **dadurch gekennzeichnet, daß** zur Vorbereitung des Auslösevorgangs eine elektro-mechanische Manipulation des Bordnetzes vorgenommen wird.

5. Verfahren nach einem der Ansprüche 1 bis 4, **dadurch gekennzeichnet, daß** das im Fahrzeug gespeicherte Codesignal nicht auslesbar und/oder nicht überschreibbar ist.

6. Verfahren nach einem der Ansprüche 1 bis 5, **dadurch gekennzeichnet, daß** das im Fahrzeug gespeicherte Codesignal fahrzeugindividuell ist und in einem externen Speicher zentral hinterlegt wird.

7. Verfahren nach Anspruch 6, **dadurch gekennzeichnet, daß** das im externen Speicher hinterlegte Codesignal nur an autorisierte Personen ausgegeben wird.

8. Verfahren nach Anspruch 7, **dadurch gekennzeichnet, daß** bei Ausgabe des gespeicherten Codesignals die Identität der Person gespeichert wird.

## Claims

1. A method for deactivating pyrotechnic actuators in a vehicle, **characterized in that** the actuators are disengaged together when an appropriate code signal that is stored in the vehicle is input from outside and the two code signals are tested for a match.

2. A method according to claim 1, **characterized in that** the actuators are simultaneously disengaged.

3. A method according to claim 1, **characterized in that** the actuators are disengaged one after the other in a set time interval.

4. A method according to any one of claims 1 to 3, **characterized in that** an electromechanical manipulation of the onboard electronics is required to prime the disengagement procedure.

5. A method according to any one of claims 1 to 4, **characterized in that** the code signal stored in the vehicle is non-readoutable and/or non-overwritable.

6. A method according to any one of claims 1 to 5, **characterized in that** the code signal stored in the vehicle is unique to that vehicle and is stored in an external central store.

7. A method according to claim 6, **characterized in that** the externally stored code signal is accessible only to authorized personnel.

8. A method according to claim 7, **characterized in that** the identity of the person is stored on issuing the stored code signal.

## Revendications

1. Procédé pour désarmer des éléments d'allumage pyrotechniques dans un véhicule,
**caractérisé en ce que**
les éléments d'allumage pyrotechniques sont déclenchés en commun quand un signal codé prévu pour cela et mémorisé dans le véhicule, est entré de l'extérieur et que le contrôle de la concordance des deux signaux a été effectué.

2. Procédé selon la revendication 1,
**caractérisé en ce que**
les éléments d'allumage pyrotechniques sont déclenchés simultanément.

3. Procédé selon la revendication 1,
**caractérisé en ce que**
les éléments d'allumage pyrotechniques sont déclenchés successivement, à des intervalles de temps définis.

4. Procédé selon l'une quelconque des revendications 1 à 3,
**caractérisé en ce que**
pour préparer l'opération de déclenchement, il est effectué une manipulation électromécanique du réseau de bord.

5. Procédé selon l'une quelconque des revendications 1 à 4,
**caractérisé en ce que**
le signal codé mémorisé dans le véhicule ne peut être lu et/ou ne peut être modifié.

6. Procédé selon l'une quelconque des revendications 1 à 5,
**caractérisé en ce que**
le signal codé mémorisé dans le véhicule est propre à celui-ci et il est déposé dans une mémoire externe centrale.

7. Procédé selon la revendication 6,
**caractérisé en ce que**
le signal codé déposé dans la mémoire externe n'est communiqué qu'à une personne autorisée.

8. Procédé selon la revendication 7,
**caractérisé en ce que**
l'identité de la personne à laquelle est communiqué le signal codé, est mémorisée.
